# EUROPEAN PATENT SPECIFICATION

(11) **EP 2 088 845 B1**
(45) Date of publication and mention of the grant of the patent: **16.01.2019**
(21) Application number: 07825580.9
(22) Date of filing: 05.11.2007
(51) Int. Cl.: A01B 33/08, A01B 33/02

(54) **A SOIL TILLING APPARATUS**
BODENBEARBEITUNGSVORRICHTUNG
APPAREIL DESTINÉ À LABOURER LE SOL

(30) Priority: 10.11.2006 IT BO20060767
(43) Date of publication of application: 19.08.2009
(73) Proprietor: Celli S.P.A., 47100 Forli' (FO) (IT)
(72) Inventor: CELLI, Paolo, 47100 Forli' (Forli'-Cesena) (IT)
(74) Representative: Fanzini, Valeriano
(86) International application number: PCT/IB2007/003333
(87) International publication number: WO 2008/056220

(56) References cited:
- US-A- 2 214 702
- US-A- 2 473 770
- US-A- 2 701 940
- US-A- 5 265 681

## Description

### Technical Field

This invention relates to an apparatus for tilling soil, especially agricultural soil.

### Background Art

Soil tilling apparatuses such as rotary hoes and "frangor" type rotary cultivators, used to prepare soil for crops, are well known. These apparatuses comprise supporting means and means for breaking up the soil operating within suitable containing means in the form of a fixed containing frame. The gap between the end of the soil break-up means and the containing cover determines the degree to which the soil is broken up, that is to say, its fineness.

One aspect of these prior art apparatuses that is generally seen as a problem is the impossibility of using the same machine in different operating conditions.

According to current technology, in a machine used to break up a specific soil to obtain a predetermined fineness and tillage depth, the gap between the end of the break-up means and the containing cover is fixed.

Thus, to till different types of soil or to obtain different degrees of fineness, different machines must be used.

Moreover, when the soil is very damp, it is virtually impossible to use a machine with a small gap or distance between the radial end of the break-up tool and the containing cover. That is because damp soil tends to clog up the tools if the distance between the end of the tools and the containing cover is small.

Conversely, a machine with a larger gap or distance between the radial end of the break-up tool and the containing cover, suitable for use on damp soil, cannot be used on the same soil under other conditions to obtain an adequate degree of fineness.

The versatility of existing machines is therefore limited.

US 2 214 702 discloses an agricolture machine comprising a soil-working rotor and a hood extending over the rotor and hinged to the frameof the agriculture machine.

### Summary of the Invention

Therefore it is provided an apparatus for tilling soil, in particular agricultural soil, comprising supporting means and means for breaking up the soil operating within suitable containing means, the apparatus presenting the features of claim 1.

It is advantageously provided a particularly versatile soil tilling apparatus that can be used to break up any kind of soil, including damp soil, to a desired grain size.

### Brief Description of the Drawings

These and other technical characteristics of the apparatus are clearly described in the claims below, and their advantages will become more apparent from the detailed description which follows, with reference to the accompanying drawings which illustrate preferred embodiments of the invention provided merely by way of example without restricting the scope of the inventive concept, which is defined in the appended claims, and in which:
- Figure 1 is a schematic longitudinal section of a preferred embodiment of the apparatus according to the invention in a first operating condition;
- Figure 2 is a schematic longitudinal section similar to that of Figure 1 of the preferred embodiment of the apparatus according to the invention in a second operating condition;
- Figure 3 is a schematic longitudinal section of a second preferred embodiment of the apparatus according to the invention;
- Figure 4 is a schematic perspective view of the second preferred embodiment of the apparatus according to the invention.

### Description of the Preferred Embodiments of the Invention

The accompanying drawings illustrate a preferred embodiment 10 of an apparatus for tilling or crushing soil, in particular agricultural soil.

The apparatus 10 comprises supporting means that delimit a soil tilling space, or chamber, labelled 13 in the drawings.

As illustrated, this preferred embodiment of the apparatus is in the form of a rotary hoe mounted on a tractor from which it receives drive motion through the respective power take-off.

In equally preferred manner, however, the invention might also be embodied by a "frangor" type rotary cultivator or any other type of soil tilling machine.

As illustrated, the apparatus comprises soil break-up means 18 in the form of a plurality of tools, or spades, 22 protruding radially from a respective rotary supporting shaft 20 that extends transversally between two flanks of the supporting frame.

More specifically, the soil break-up means comprise a plurality of radial tools, or spades, 22 which are circumferentially distributed and transversally spaced from each other and each of which has a respective surface 19 for engaging and breaking up the soil.

The apparatus 10 also comprises containing means 24 under which the soil break-up means 18 operate.

Advantageously, the containing means 24 can be adjustably positioned relative to the soil break-up means 18.

In particular, the containing means 24 are advantageously mobile relative to the soil break-up means 18.

Further, the containing means 24 are advantageously mobile relative to the supporting means 12 and, in particular, are mobile vertically.

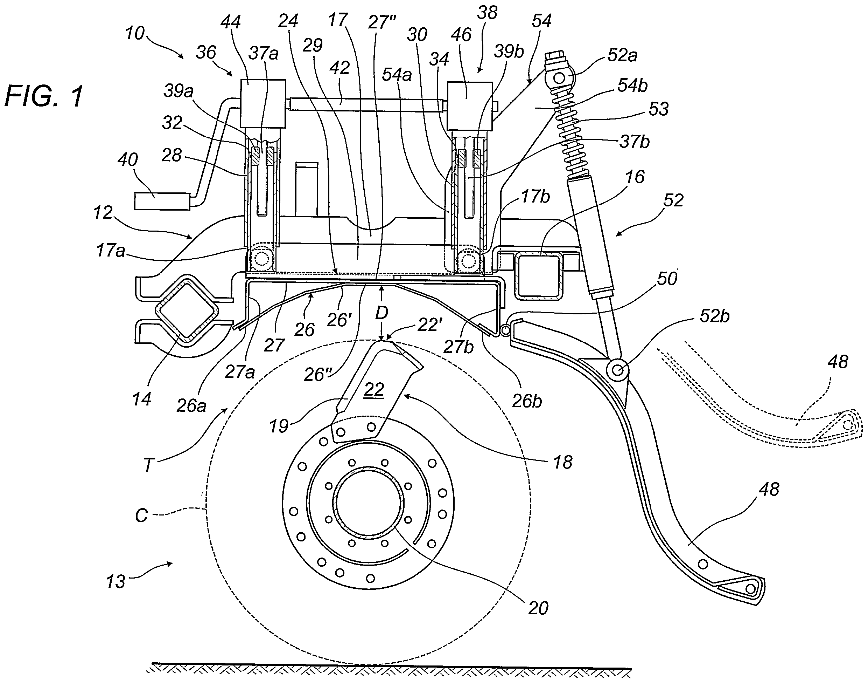

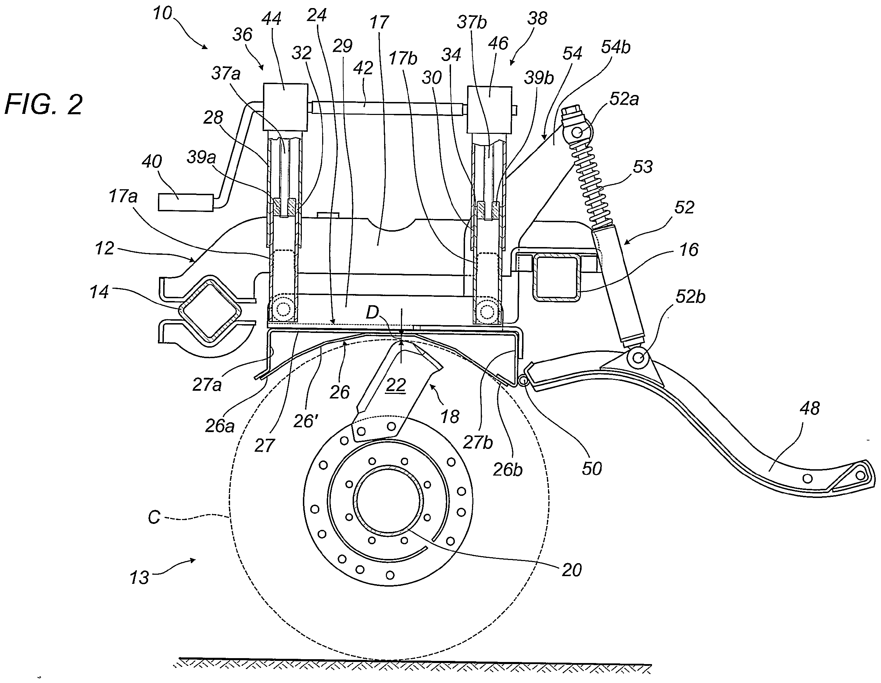

The containing means 24 can be set at any position between a position, illustrated in Figure 2, where they are closest to the break-up means 18, and a position, illustrated in Figure 1, where they are furthest away from the break-up means 18.

In practice, means are provided for varying the gap "D" between the containing means 24, in particular between the surface of them 26' that faces the break-up means 18 and the tip 22' of the break-up means that describes the circle labelled C in the drawings.

The soil tilling apparatus thus obtained can advantageously be used in a particularly versatile manner to break up any kind of soil to a desired grain size.

As illustrated, the containing means 24 are positioned above the break-up means 18.

As illustrated, the panel 26 is in the form of a substantially arcuate moulded plate and extends circumferentially around the rotor 18. Thus, the moulded plate 26, defined by a series of straight sections joined to each other like a broken line, forms between its underside and the edge 22' of the break-up means 22, a suitable circumferential channel "T" for breaking up the soil.

The containing means 24 comprise, in particular, a moulded panel 26 whose concavity faces the break-up means 18.

Means are advantageously provided for moving said containing means 24.

These movement means comprise means 28, 30 for guiding the movement of the containing means 24.

In particular, said guide means are in the form of respective elements 28, 30 which are fixed to the supporting means and which cooperate with respective elements 32, 34 that are integral with the containing means 24.

More specifically, as illustrated, these guide means extend vertically and comprise first guide means 28 and second guide means 30 which are longitudinally spaced from each other.

As illustrated, said guide means 28, 30, which are fixed to the supporting means 12, are embodied by tubular elements, like the guide elements 32, 34, and are fixed to the containing means 24.

The guide elements 32, 34 are slidable within the guide elements 28, 30 fixed to the supporting means 12, and, in particular, their outside surface slides in contact with the inside surface of the guide elements 28, 30.

Further, these movement means advantageously comprise actuating means 36, 38 for moving the containing means 26.

More specifically, these actuating means comprise first actuating means 36 and second actuating means 38 which are longitudinally spaced from each other and which extend vertically.

Advantageously, the actuating means 36, 38 extend within the guide means 28, 30 fixed to the supporting means 12.

Also, advantageously, the actuating means 36, 38 extend within the guide means 32, 34 which are integral with the containing means 24.

As illustrated, the actuating means 36, 38 are embodied by worm screw means 37a, 37b.

A lead nut, or slider, 39a, 39b moves on the respective screw 37a, 37b, said lead nut being fixed to the guide means 32, 34 which are integral with the containing means 24, inside the guide means 32, 34.

In this way, the mobile guide means 32, 34 may have an outside sliding guide surface and an internal surface for connection to the actuating means.

Advantageously, also, the actuating means 36, 38 comprise a lead nut, or slider, 39a, 39b which moves longitudinally along the screw means 37a, 37b, and which is fixed to one end of the guide means 32, 34 integral with the containing means 24.

Means 40, 42 are provided for driving the movement of the containing means.

Advantageously, these drive means can be operated manually.

For simplicity, the drive means comprise a crank 40 designed to rotate a respective shaft 42 which extends transversally of the actuating movement and which makes it possible to drive the actuating means 38 at the same time as the actuating means 36.

Means are also provided for transmitting the movement from the drive means to the vertical actuating means 36, 38 and which are in the form of respective gears housed in respective gearboxes 44, 46 illustrated in the drawings.

Means 48 are also provided for regulating the egress of soil from the tilling chamber 13 delimited by the containing means and the ground below.

Advantageously, the means for regulating the egress of the soil, which are embodied by a moulded panel, or flap, 48, are mounted on the mobile containing means 24 so that they can be moved as one with the latter.

As illustrated, the soil egress regulating means 48 are connected in articulated manner to the containing means 24, in particular by a front end of the flap 48, upstream of the direction of travel of the apparatus, the flap being connected in articulated manner, or hinged, at 50, to the rear end of the containing means 24.

Means 52 are provided for moving the soil egress regulating means.

Said means 52 for moving the soil egress regulating means are located between the regulating means 48 themselves and the containing means 24 .

As illustrated, the means for moving the soil egress regulating means are in the form of at least one linear actuator 52, and, in particular, are embodied by a hydraulic cylinder having elastic means 53 for absorbing backlash.

One end 52a of the means 52 for moving the soil egress regulating means is connected to an arm 54 extending upwards from the containing means 24. The other end 52b of the means 52 is connected to an intermediate area of the soil egress regulating panel 48.

The arm 54 that mounts the soil egress regulating means has a portion 54a that extends upwards from the containing means 24 and from which extends a portion 54b that extends upwards and backwards.

Advantageously, the supporting means 12 are in the form of a frame having beam elements 14, 16 which extend transversally and which are connected to each other by respective beam elements 17 extending longitudinally.

Advantageously, the transversally extending beam elements comprise a first beam, or profile section, 14, and a second beam, or profile section, 16 which are longitudinally spaced from each other and between which the containing means 24 extend, or are positioned.

Advantageously, the guide means 28, 30 fixed to the supporting means 12 are mounted on the longitudinal beam elements 17 and extend upwards from the latter.

In particular, the containing means 24 comprise an upper panel 27 connected to the mobile guide means 32, 34 through respective longitudinal profile sections 29.

The upper panel 27 has downwardly extending ends 27a, 27b for supporting respective ends 26a, 26b of the containing panel 26 positioned under the arcuate moulded panel 27 in such a way that its upper end 26" is positioned at the main surface 27" of the panel 27.

In particular, as illustrated, the distance of the moulded surface 26 from the circle described by the break-up tools 22 is variable and, more specifically, is smaller at the rear end or area 26b of the moulded containing surface.

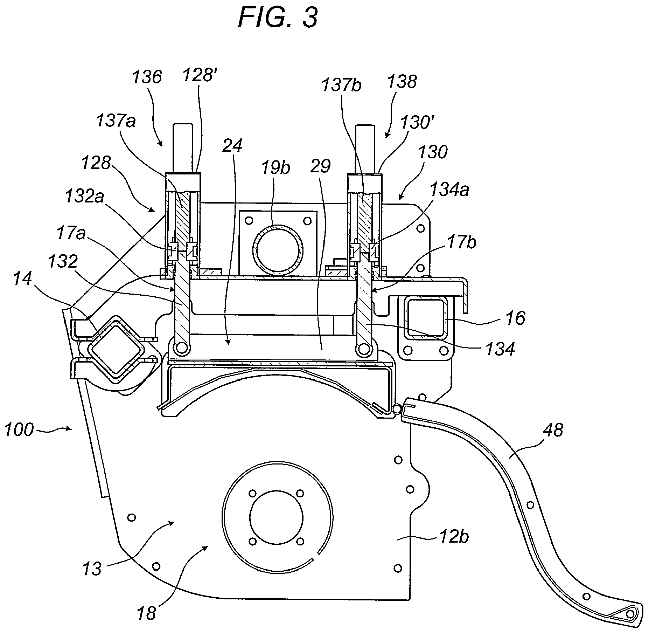

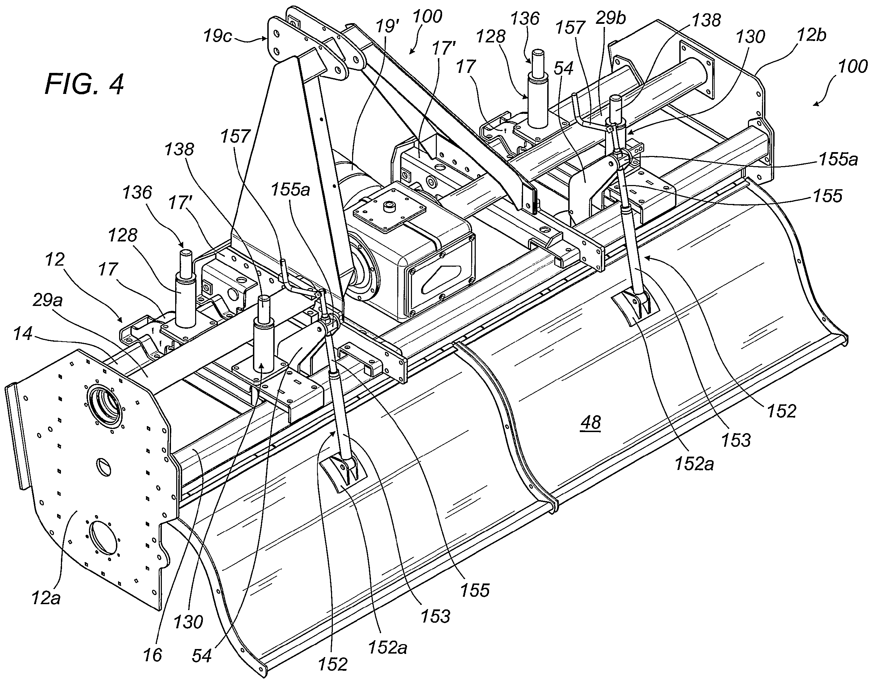

Figures 3 and 4, illustrate a second preferred embodiment 100 of an apparatus for tilling or crushing soil, in particular agricultural soil.

The second preferred embodiment of the apparatus is substantially the same as the first preferred embodiment and the components of the second embodiment that are identical to those of the first embodiment are denoted by the same reference characters and are not described again in detail so as not to unduly complicate the specification.

Like the first embodiment, the second preferred embodiment comprises a rotor 18 which in turn comprises tools, or spades, (not illustrated in detail in Figures 3 and 4) for breaking up the soil, and which extends transversally between two opposite flanks 12a, 12b of the supporting frame 12.

As in the first embodiment, the supporting frame 12 comprises respective crossbars or beam elements 14, 16 extending transversally and which are connected to each other by respective beam elements 17, 17, 17',17', extending longitudinally.

As in the first embodiment, the central longitudinal beam elements 17', 17' mount the power take-off 19' and a transmission system that drives respective transversal shafts which transmit motion to the rotor 18 and which are housed in the tubular elements 19a, 19b. The longitudinal beam elements 17', 17' also mount the means, labelled 19c, for hitching the apparatus to the tractor.

The longitudinal beam elements 17, 17 are in turn located in an intermediate position of the corresponding transversal part of the apparatus on the two opposite sides of the central hitch and mount the means for moving the containing means 24, said movement means extending towards the containing panel 24 below through corresponding vertical holes 17a, 17b, also shown in Figures 1 and 2 illustrating the first preferred embodiment of the apparatus, these holes being made in the fixed supporting means 12, that is, in the lateral longitudinal beam elements 17, 17.

In the second embodiment 100 of the apparatus according to the invention, as in the first preferred embodiment, the movement means, located at each lateral longitudinal beam element 17, 17, comprise means 128, 130 for guiding the movement of the containing means 24.

More specifically, these guide means are in the form of tubular elements 128, 130, which are fixed to the supporting means 17 and cooperate with, or are operatively connected to, respective elements 132, 134 that are integral with the containing means 24.

In particular, as illustrated, these guide means extend vertically and comprise first guide means 128 and second guide means 130 which are longitudinally spaced from each other.

As illustrated, said guide means 128, 130, which are fixed to the supporting means 12, are embodied by tubular elements, while the elements 132, 134 which are connected to the containing means 24, are in the form of corresponding elongated rods extending coaxially inside the fixed guide means 128, 130 and are guided inside the fixed tubular elements 128, 130 through slide shoe means, embodied in particular by respective slide shoes 132a, 134a.

As illustrated, these sliding guide means 132a, 134a are circumferentially mounted on the outside of, and are integral with, the elements 132, 134 and are slidable within the guide elements 128, 130 fixed to the supporting means 12, and, in particular, their outside surface slides in contact with the inside surface of the guide elements 128, 130.

Further, these movement means advantageously comprise actuating means 136, 138 for moving the containing means 24.

More specifically, these actuating means comprise first actuating means 136 and second actuating means 138 which are longitudinally spaced from each other and which extend vertically.

Advantageously, these actuating means are in the form linear actuators 136, 138, in particular embodied by hydraulic cylinders having respective rods 137a, 137b each of whose ends is connected to the respective rod 132, 134 that is integral with the containing means 24.

The connection between the rod 137a, 137b of each actuator 136, 138 to the respective rod 132, 134, integral with the containing means 24, is achieved by the respective slide shoe 132a, 134a, the end of the respective rod 137a, 137b extending into the mobile guide means 132a, 134a. The slide shoe means 132a, 134a thus constitute means for connecting the rods 137a, 137b of the actuators 136, 138 to the respective means 132, 134 that are integral with the containing means 24.

The actuating cylinders 136, 138 are mounted on the respective fixed guides 132, 134, extending upwards from the bottoms of them 128', 130', and the respective rods 137a, 137b extend into the guide means 128, 130 fixed to the supporting means 12.

In this way, the containing means can be lifted and lowered quickly and easily, for example while comfortably seated in the driver's cab of the tractor or the like.

The second embodiment, too, comprises means 48 for regulating the egress of soil from the tilling chamber 13 and delimited by the containing means and the ground below, said regulating means 48 being substantially the same as those of the first embodiment and will not therefore be described in detail again.

On opposite transversal sides of the apparatus, means 152 are provided for moving the soil egress regulating means and comprising a respective tubular element 153 connected at one end 152a to an intermediate area of the soil egress regulating panel 48 and operatively connected at the other end to a rod 155 connected to a crank for lifting and lowering the panel or flap 48.

At one end of it 155a the rod 155 for moving the soil egress regulating means is rotatably mounted on an arm 54 which extends upwards from the containing means 24 and which is identical to the supporting arm of the first embodiment described above.

The apparatus is particularly versatile, easy to operate and it can be effectively used to break up any kind of soil to a desired grain size. The apparatus has also a structure which is advantageously quick and inexpensive to construct using simple components.

The invention described above is susceptible of industrial application and may be modified and adapted in several ways without thereby departing from the scope of the inventive concept, as defined in the appended claims. Moreover, all the details of the invention may be substituted by technically equivalent elements.

## Claims

1. An apparatus (10) for tilling soil, in particular agricultural soil, comprising supporting means (12, 14, 16, 17) and means (18) for breaking up the soil operating within suitable containing means (24), said containing means (24) being adjustably positioned relative to the soil break-up means (18); the apparatus further comprising means for moving the containing means (24), said movement means comprise means (28, 30) for guiding the movement of the containing means (24) and means (36, 38) for actuating the movement; **characterized in that** said guide means (28, 30) extend vertically in such a way move vertically the containing means (24) with respect to the means (18) for breaking up the soil.

2. The apparatus according to claim 1, **characterized in that** the containing means (24) are mobile relative to the supporting means (12).

3. The apparatus according to any of the foregoing claims, **characterized in that** the containing means (24) can be set at any position between a position where they are closest to the break-up means (18) and a position where they are furthest away from the break-up means (18).

4. The apparatus according to any of the foregoing claims, **characterized in that** the containing means (24) are positioned above the break-up means (18).

5. The apparatus according to any of the foregoing claims, **characterized in that** the containing means (24) comprise a moulded bottom panel (26) facing the break-up means (18).

6. The apparatus according to any of the foregoing claims, **characterized in that** the means for moving the containing means (24) are designed to vary the gap (D) between the containing means (24) and the break-up means (18).

7. The apparatus according to any of the foregoing claims, **characterized in that** said guide means comprise at least one element (28, 30) fixed to the supporting means and which guides a respective element (32, 34) that is integral with the containing means (24).

8. The apparatus according to any of the foregoing claims, **characterized in that** said guide means comprise first guide means (28) and second guide means (30) which are longitudinally spaced from each other.

9. The apparatus according to any of the foregoing claims, **characterized in that** it comprises guide means that are fixed to the supporting means (12) and are in the form of tubular elements.

10. The apparatus according to any of the foregoing claims, **characterized in that** it comprises guide means (32, 34) that are integral with the containing means (24) and are in the form of tubular elements.

## Patentansprüche

1. Vorrichtung (10) zum Pflügen von Land, insbesondere von landwirtschaftlichen Flächen, mit Stützmitteln (12, 14, 16, 17) und mit Mitteln (18) zum Zerkleinern des Bodens mit geeigneten Einschließungsmitteln (24), wobei die Einschließungsmitteln (24) sind positioniert mit der Möglichkeit der Einstellung bezüglich der Bodenbrechmittel (18); wobei die Vorrichtung ferner Mittel zum Bewegen der Einschließungsmittel (24) umfasst, wobei die beweglichen Mittel (28, 30) zum Führen der Bewegung der Einschließungsmittel (24) und Mittel (36, 38) zum Aktivieren der Bewegung, umfassen; **dadurch gekennzeichnet, dass** die Führungsmittel (28, 30) sich vertikal derart erstrecken, dass sie die Einschließungsmittel (24) in Bezug auf die Mittel (18) vertikal verschieben, um den Boden zu zerbrechen.

2. Vorrichtung nach Anspruch 1, **dadurch gekennzeichnet, dass** die Einschließungsmittel (24) relativ zu den Stützmitteln (12) beweglich sind.

3. Vorrichtung nach einem der vorhergehenden Ansprüche, **dadurch gekennzeichnet, dass** die Einschließungsmittel (24) in jeder Position zwischen einer Position eingestellt werden können, in der sie zu den Brechungsmittel nähst sind (18), und einer Position, in der sie zu den Brechungsmitteln (18) weitest sind.

4. Vorrichtung nach einem der vorhergehenden Ansprüche, **dadurch gekennzeichnet, dass** die Einschließungsmittel (24) oberhalb der Brechungsmittel (18) positioniert sind.

5. Vorrichtung nach einem der vorhergehenden Ansprüche, **dadurch gekennzeichnet, dass** die Einschließungsmittel (24) eine untere bedruckte Platte (26) aufweisen, die den Brechungsmitteln (18) zugewandt ist.

6. Vorrichtung nach einem der vorhergehenden Ansprüche, **dadurch gekennzeichnet, dass** die Einschließungsmittel (24) zum Modifizieren des Raums (D) zwischen den Einschließungsmitteln (24) und den Brechungsmitteln (18) vorgesehen sind.

7. Vorrichtung nach einem der vorhergehenden Ansprüche, **dadurch gekennzeichnet, dass** die genannten Führungsmittel mindestens ein einzelnes Element (28, 30) umfassen, das an den Stützmitteln befestigt ist und ein jeweiliges Element (32, 34) führt, das integral mit den Einschließungsmitteln (24) ist.

8. Vorrichtung nach einem der vorhergehenden Ansprüche, **dadurch gekennzeichnet, dass** die genannten Führungsmittel erste Führungsmittel (28) und zweite Führungsmittel (30) aufweisen, die in Längsrichtung mit Abstand voneinander angeordnet sind.

9. Vorrichtung nach einem der vorhergehenden Ansprüche, **dadurch gekennzeichnet, dass** sie Führungsmittel umfasst, die an den Trägermitteln (12) befestigt sind und die Gestalt von rohrförmigen Elementen aufweisen.

10. Vorrichtung nach einem der vorhergehenden Ansprüche, **dadurch gekennzeichnet, dass** sie Führungsmittel (32, 34) aufweist, die integral mit den Einschließungsmitteln (24) ausgebildet sind und die Gestalt von rohrförmigen Elementen aufweisen.

## Revendications

1. Dispositif (10) pour labourer des terres, en particulier des terres agricoles, comprenant des moyens de support (12, 14, 16, 17) et des moyens (18) pour écraser le sol avec des moyens de confinement (24) appropriés, lesdits moyens de le confinement (24) étant positionnés avec possibilité de réglage par rapport aux moyens (18) pour écraser le sol; le dispositif comprend en outre un moyen pour déplacer le moyen de confinement (24), lesdits moyens mobiles comprenant des moyens (28, 30) pour guider le mouvement du moyen de confinement (24) et des moyens (36, 38) pour l'activation du déplacement; **caractérisé en ce que** lesdits moyens de guidage (28, 30) s'étendent verticalement de manière à déplacer verticalement les moyens de confinement (24) par rapport aux moyens (18) pour écraser le sol.

2. Dispositif selon la revendication 1, **caractérisé en ce que** les moyens de confinement (24) sont mobiles par rapport aux moyens de support (12).

3. Dispositif selon l'une quelconque des revendications précédentes, **caractérisé en ce que** les moyens de confinement (24) peuvent être réglés dans une position quelconque entre une position dans laquelle ils sont le plus possible proches aux moyens d'écrasement (18), et une position dans laquelle ils sont le plus possible loin des moyens d'écrasement (18).

4. Dispositif selon l'une quelconque des précédentes revendications, **caractérisé en ce que** les moyens de confinement (24) sont positionnés au- dessus des moyens d'écrasement (18).

5. Dispositif selon l'une quelconque des revendications précédentes, **caractérisé en ce que** les moyens de confinement (24) comprennent un panneau imprimé inférieur (26) faisant face aux moyens d'écrasement.

6. Dispositif selon l'une quelconque des revendications précédentes, **caractérisé en ce que** les moyens de confinement (24) sont prévus pour modifier l'espace (D) entre les moyens de confinement (24) et les moyens d'écrasement (18).

7. Dispositif selon l'une quelconque des revendications précédentes, **caractérisé en ce que** lesdits moyens de guidage comprennent au moins un seul élément (28, 30), fixé aux moyens de support et qui guide un élément respectif (32, 34) qui est intégré avec le moyen de confinement (24).

8. Dispositif selon l'une quelconque des revendications précédentes, **caractérisé en ce que** lesdits moyens de guidage comprennent des premiers moyens de guidage (28) et des seconds moyens de guidage (30) mutuellement espacés longitudinalement.

9. Dispositif selon l'une quelconque des revendications précédentes, **caractérisé en ce qu'**il comprend des moyens de guidage qui sont fixés sur les moyens de support (12) et ont la forme d'éléments tubulaires.

10. Dispositif selon l'une quelconque des revendications précédentes, **caractérisé en ce qu'**il comprend des moyens de guidage (32, 34) qui sont intégrés avec les moyens de confinement (24) et se présentent sous la forme d'éléments tubulaires.
